# FASCICULE DE BREVET EUROPEEN

(11) **EP 0 527 667 B1**
(45) Date de publication et mention de la délivrance du brevet: **13.12.1995**
(21) Numéro de dépôt: 92402162.9
(22) Date de dépôt: 27.07.1992
(51) Int. Cl.: G05B 9/03, G06F 11/18, H03K 19/23

(54) **Voteur à trois entrées**
Drei-Eingänge-Abstimmungsschaltung
Three-input voting circuit

(30) Priorité: 02.08.1991 FR 9109880
(43) Date de publication de la demande: 17.02.1993
(73) Titulaire: AEROSPATIALE Société Nationale Industrielle, 75781 Paris Cédex 16 (FR)
(72) Inventeur: Bascans, Rémi, 25, Bld de la Méditerranée, F-31400 Toulouse (FR); Autechaud, Eric, F-31000 Toulouse (FR); Fleury, Christophe, F-31770 Colomiers (FR); N'Guyen, Christian, F-31700 Blagnac (FR)
(74) Mandataire: Bonnetat, Christian

(56) Documents cités:
- US-A- 3 555 290
- ISA TRANSACTIONS, vol. 29, no. 2, 1 Février 1990, PITTSBURGH, US, pages 13-16, A.A. FREDERICKSON: "Fault tolerant programmable controllers for safety systems"

## Description

La présente invention concerne un voteur à trois entrées, tel que connu du brevet US-A-3 555 290.

On sait que les voteurs sont des dispositifs, matériels et/ou logiciels, qui, recevant une pluralité (généralement au moins égale à trois) de signaux d'entrée indépendants, issus de sous-systèmes utilisés en redondance, signaux représentatifs d'une même grandeur, délivrent à leur sortie un signal de sortie résultant d'un vote spécifique. Par exemple, dans le cas de trois signaux d'entrée :
- le vote est majoritaire et le signal de sortie est la valeur de deux signaux d'entrée identiques ; ou
- le vote concerne la médiane et le signal de sortie est constitué par le signal d'entrée qui est encadré par les deux autres ; ou
- le vote est adaptatif, le signal d'entrée le plus éloigné par rapport aux deux autres étant rejeté et le signal de sortie étant la moyenne des deux signaux d'entrée restants ; etc...

Le rôle d'un voteur à trois entrées est d'assurer à sa sortie un signal correct à partir des trois signaux d'entrée, c'est-à-dire de tolérer la défaillance d'un de ses trois signaux d'entrée, ce qui pose, de par son principe, deux problèmes :
- lors de la défaillance, dans des états voisins, de deux signaux d'entrée, le vote privilégie les deux signaux d'entrée incorrects, car ils sont majoritaires, et ce fonctionnement non désiré n'est pas vu par le système. Les voteurs permettant de détecter l'existence d'une seconde entrée défaillante nécessitent un mécanisme supplémentaire qui rend l'ensemble plus complexe ;
- la sortie unique représente le point critique d'une architecture triplex (système composé de trois sous-systèmes remplissant la même fonction afin de fournir, à un voteur à trois entrées, trois signaux indépendants, mais représentatifs d'une même grandeur) car, lors d'une défaillance se manifestant en sortie du voteur, le service ne peut plus être rendu ou, pire, peut être incorrect. Autrement dit, un voteur n'est pas tolérant à ses propres défaillances, ce qui entraîne le risque de perdre un service correct sur une simple défaillance au niveau du voteur.

Suivant le type de voteur mis en oeuvre, on peut rencontrer d'autres difficultés :
- nécessité d'une synchronisation stricte des trois signaux d'entrée les uns par rapport aux autres pour effectuer le vote ;
- problème de traitement de signaux d'entrée corrects, mais non identiques, du fait des tolérances de chaque sous-système d'élaboration desdits signaux d'entrée ;
- problème du taux de détection de mauvais fonctionnement (proportion entre les défaillances détectées et non détectées) à partir de trois signaux, qui est plus complexe et moins déterministe que pour les architectures duplex (système composé de deux sous-systèmes remplissant la même fonction afin de fournir, à un mécanisme approprié, deux signaux indépendants, mais représentatifs d'une même grandeur) où la détection d'un mauvais fonctionnement du système est une simple comparaison de deux signaux ;
- problème de certains voteurs qui masquent les erreurs sans localiser l'entrée défaillante, d'où l'impossibilité d'informer le système quant à l'identité du sous-système défaillant.

Les voteurs logiciels permettent de mettre en place un vote évolué, mais au prix d'un temps de calcul non négligeable, qui peut être inexploitable pour les systèmes rapides. Aussi ce vote évolué implique un logiciel important qui demande un effort important de validation.

La présente invention a pour but de remédier à ces inconvénients. Elle permet, par la mise en oeuvre de moyens simples, à la fois d'augmenter la fiabilité opérationnelle et la sécurité. Elle concerne, de plus, tous les types de signaux, ceux-ci pouvant être électriques, optiques, pneumatiques, ou autres, analogiques ou numériques, séries ou parallèles. Elle est à même d'assurer à un système la continuité d'un service correct sur une seule sortie, lorsqu'un de ses trois sous-systèmes est défaillant, et d'isoler la sortie du voteur lorsque celui-ci n'est plus en mesure d'assurer un service correct.

A cette fin, selon l'invention, le voteur comportant une sortie, ainsi qu'une première entrée, une deuxième entrée et une troisième entrée recevant respectivement un premier signal, un deuxième signal et un troisième signal, est remarquable en ce qu'il comporte :
- un aiguilleur unique et à deux voies, pourvu d'une entrée active, d'une entrée de repos, et d'une entrée de commande apte à recevoir un signal de commande forçant, selon son état, ledit aiguilleur à un état actif ou à un état repos, et d'une sortie commune, ladite entrée de repos et ladite entrée active dudit aiguilleur étant respectivement reliées auxdites première et deuxième entrées dudit voteur, tandis que ladite sortie commune dudit aiguilleur est reliée à ladite sortie dudit voteur, cette sortie commune transmettant le signal appliqué sur l'entrée active lorsque ledit aiguilleur est à l'état actif, et transmettant le signal appliqué sur l'entrée de repos lorsque ledit aiguilleur est à l'état repos ; et
- un premier moniteur ayant uniquement deux entrées respectivement reliées auxdites deuxième et troisième entrées dudit voteur, apte à mesurer l'écart entre lesdits deuxième signal et troisième signal, et dont la sortie est reliée à l'entrée de commande dudit aiguilleur pour commander l'état de cet aiguilleur.

Ce voteur est ainsi apte à détecter la défaillance desdits deuxième et/ou troisième signaux d'entrée et à transmettre en sortie un autre signal d'entrée.

Le premier moniteur peut présenter toute structure appropriée.

Un mode de réalisation électrique, donné à titre d'exemple pour des signaux analogiques ou numériques, séries ou parallèles, est remarquable en ce que ledit premier moniteur comprend :
- des moyens différenciateurs pour mesurer la différence entre les signaux appliqués aux entrées dudit premier moniteur ;
- des moyens comparateurs, pour comparer ladite différence à un seuil prédéterminé, et engendrer un signal d'erreur si la valeur absolue de ladite différence est supérieure à la valeur absolue dudit seuil.

Ainsi, ledit premier moniteur délivre un signal de sortie destiné à commander dans un état donné l'aiguilleur à deux voies associé, non seulement lorsque les deux signaux appliqués à ses entrées sont identiques, mais encore lorsque ces derniers signaux sont légèrement différents (du fait d'un décalage en amplitude et/ou en phase), ledit seuil permettant de tolérer des différences acceptables en amplitude, tandis qu'une différence trop grande entre les signaux d'entrée entraîne un signal d'erreur servant à faire changer d'état l'aiguilleur de façon à supprimer la transmission du signal incorrect.

Avantageusement, afin de masquer l'effet de défauts transitoires, des moyens temporisateurs sont interposés en série sur la sortie du premier moniteur.

L'aiguilleur à deux voies peut être du type commutateur électrique ou dispositif de commutation électrique, et constitué d'un ou plusieurs éléments de commutation identiques disposés en parallèle.

Dans le cas où les signaux d'entrée sont optiques, l'aiguilleur à deux voies peut être du type multiplexeur optique à commande électrique, ou commutateur optique à commande électrique constitué de plusieurs éléments de commutation optique identiques disposés en parallèle.

Si les signaux d'entrée sont pneumatiques ou hydrauliques, l'aiguilleur à deux voies est avantageusement du type commutateur hydraulique ou pneumatique ou commutateur hydraulique ou pneumatique constitué de plusieurs éléments de commutation identiques disposés en parallèle. Ce premier moniteur peut comporter un organe soumis à l'action antagoniste des signaux apparaissant aux entrées de signal dudit premier moniteur et commandant le passage de fluide entre une source de pression et la sortie dudit moniteur. En particulier, ledit voteur hydraulique ou pneumatique peut comporter au moins une deuxième porte logique OU ou une troisième porte logique ET qui sont réalisées à l'aide d'au moins un piston. On peut ainsi réaliser toute fonction logique ET ou bien OU sur les signaux hydrauliques ou pneumatiques.

Ledit premier moniteur peut être un moniteur sécurisé comportant au moins deux moniteurs jumelés dont les entrées sont respectivement branchées en parallèle, et dont les sorties sont respectivement reliées aux entrées d'une troisième porte logique à deux entrées, de type ET, dont la sortie est apte à fournir un signal dont un état correspond en propre à la détection de l'identité des deux signaux appliqués sur les entrées des moniteurs lorsque lesdits deux moniteurs jumelés fournissent chacun en sortie un tel signal de détection d'identité, ladite sortie de cette troisième porte logique fournissant un signal d'état différent dans les autres cas.

La probabilité de défaillance entraînant un blocage de la sortie du moniteur sécurisé à l'état actif est ainsi réduite, ce qui augmente la sécurité.

Tout voteur tel que précédemment décrit peut comporter, de plus :
- un interrupteur pourvu d'une entrée active, d'une entrée de commande apte à recevoir un signal de commande forçant, selon son état, ledit interrupteur à un état actif ou à un état repos, et d'une sortie commune, ladite entrée active et ladite sortie commune dudit interrupteur étant respectivement reliées à ladite sortie commune dudit aiguilleur et à la sortie dudit voteur ;
- un deuxième moniteur, de fonction identique à celle du premier moniteur, dont les deux entrées sont respectivement reliées auxdites première et troisième entrées dudit voteur, apte à mesurer l'écart entre lesdits premier et troisième signaux ;
- un troisième moniteur, de fonction identique à celle du premier moniteur, dont les entrées sont respectivement reliées auxdites première et deuxième entrées dudit voteur, apte à mesurer l'écart entre lesdits premier signal et deuxième signal ; et
- une deuxième porte logique à trois entrées, de type OU, dont la sortie est apte à fournir un signal dont un état correspond en propre à la détection de l'identité des deux signaux appliqués sur les entrées d'un moniteur lorsque l'un au moins desdits moniteurs fournit en sortie un tel signal de détection d'identité, ladite sortie de cette deuxième porte logique fournissant un signal d'état différent dans l'autre cas, les entrées de ladite deuxième porte logique OU étant respectivement reliées aux sorties desdits premier, deuxième et troisième moniteurs, et sa sortie étant reliée à l'entrée de commande dudit interrupteur et étant susceptible de commander l'état de cet interrupteur.

Ainsi, le voteur selon l'invention est tolérant à la défaillance d'un des signaux d'entrée, les moniteurs et ladite deuxième porte logique OU isolant la sortie du voteur lorsque deux signaux d'entrée sont défaillants, ce qui améliore la sécurité.

Le principe de fonctionnement de l'invention est simple et s'adapte à tous les types de signaux, optiques, électriques ou autres. Toutefois la réalisation du voteur, en particulier du ou des moniteurs et de l'aiguilleur dépend :
- du type des signaux d'entrée ;
- des contraintes liées aux interactions avec l'environnement (fonctionnement asynchrone, mécanisme de détection des défaillances, temps de réponse garantie souhaité, etc...).

Selon l'application, il en résulte donc une quantité de réalisations dont seulement quelques unes sont décrites dans la présente description.

De plus, le voteur selon l'invention a la possibilité de connaître l'identité du sous-système défaillant en analysant l'état des moniteurs du voteur, et ainsi peut diagnostiquer sa défaillance afin d'agir en conséquence.

Les figures du dessin annexé feront bien comprendre comment l'invention peut être réalisée. Sur ces figures, des références identiques désignent des éléments semblables.

La figure 1 donne le schéma synoptique du voteur à trois entrées conforme à la présente invention.

La figure 2 est la table de vérité dudit voteur à trois entrées de la figure 1.

La figure 3 donne le schéma synoptique d'un exemple de réalisation d'un moniteur utilisé dans ledit voteur, avec un seuil.

La figure 4 montre le schéma synoptique d'une variante, comportant un temporisateur, du moniteur représenté sur la figure 3.

La figure 5 illustre un mode de réalisation dudit moniteur avec temporisateur, sous forme électronique.

Les figures 6a à 6f sont des chronogrammes de signaux permettant d'expliquer le fonctionnement du moniteur de la figure 5.

La figure 7 donne le schéma synoptique d'un exemple de réalisation d'un aiguilleur à plusieurs voies parallèles.

La figure 8 montre un schéma synoptique d'un voteur selon l'invention, ayant une sécurité de fonctionnement accrue.

La figure 9 est la table de vérité du voteur représenté à la figure 8.

La figure 10 montre un voteur selon l'invention, comportant un moniteur sécurisé.

La figure 11 illustre la réalisation du voteur en technique électro-optique.

La figure 12 illustre la réalisation du voteur en technique hydraulique ou pneumatique.

Les figures 13 et 14 montrent schématiquement la réalisation pneumatique ou hydraulique d'un moniteur et d'un aiguilleur à deux voies selon l'invention, respectivement.

Les figures 15 et 16 montrent schématiquement et respectivement des exemples de réalisation hydraulique ou pneumatique d'une porte ET et d'une porte OU.

La figure 17 montre la réalisation intégrée de portes ET et OU comme illustrées par les figures 15 et 16.

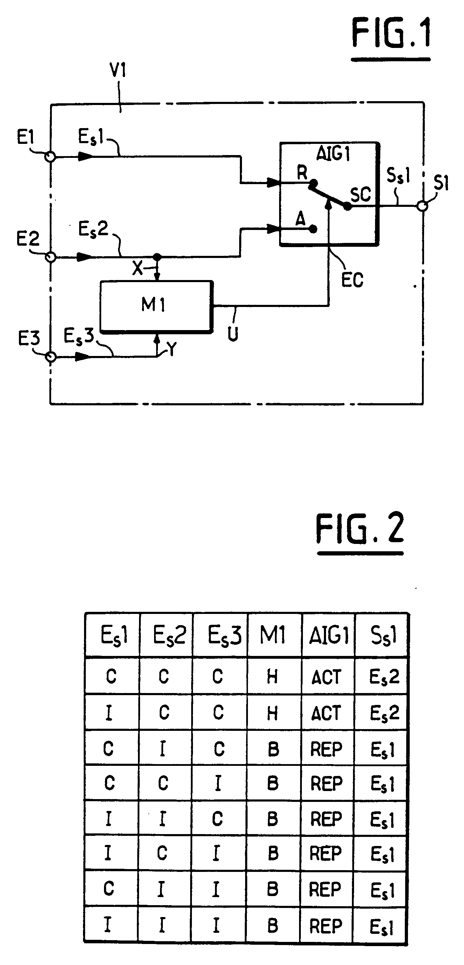

Le voteur V1, conforme à la présente invention et montré par la figure 1, est pourvu d'une première entrée E1, d'une deuxième entrée E2 et d'une troisième entrée E3 ainsi que d'une sortie S1. Il comporte :
- un aiguilleur AIG1 à deux voies, pourvu d'une entrée active A, d'une entrée de repos R et d'une entrée de commande EC, aiguilleur qui transmet, à une sortie commune SC, le signal appliqué sur l'entrée active A ou sur l'entrée de repos R selon que l'aiguilleur AIG1 est respectivement à l'état actif ACT ou à l'état repos REP, en fonction du signal rendu sur ladite entrée de commande EC. Ladite entrée de repos R et ladite entrée active A dudit aiguilleur AIG1 sont respectivement reliées à la première entrée E1 et à la deuxième entrée E2 du voteur V1, tandis que ladite sortie commune SC est reliée à ladite sortie S1 ; et
- un premier moniteur M1 à deux entrées X, Y respectivement reliées auxdites deuxième entrée E2 et troisième entrée E3 et dont la sortie U est reliée à l'entrée de commande EC de l'aiguilleur AIG1 et est susceptible de commander l'état dudit aiguilleur AIG1.

Le signal Uₛ en sortie U du premier moniteur M1 peut prendre un parmi deux états possibles, selon que ce premier moniteur M1 a détecté ou pas une discordance entre les signaux d'entrée Xₛ et Yₛ appliqués respectivement sur ses deux entrées X et Y. Ces deux états possibles peuvent apparaître sous forme de toutes grandeurs, en fonction de la réalisation de ce premier moniteur M1, par exemple un signal électrique de niveau constant haut ou bas, ou une valeur de commande numérique, ou encore la présence ou l'absence d'une pression ou toute autre grandeur. Dans un but de clarté, on appelle état bas B l'un de ces états, et état haut H l'autre état en sortie U du premier moniteur M1. Comme expliqué ci-dessus, une telle appellation ne préjuge pas de la façon dont ces états sont traduits physiquement, et en particulier pas de la grandeur relative entre les deux signaux traduisant ces états. La sortie U est à l'état bas B lorsque les deux signaux Xₛ et Yₛ reçus sur lesdites entrées X et Y sont différents, et est à l'état haut H lorsque le premier moniteur M1 reçoit des signaux Xₛ et Yₛ identiques sur ses deux entrées X et Y. Dans la présente description, on considère comme "différents" des signaux Xₛ et Yₛ dont l'écart est hors d'un domaine de tolérance accepté et comme "identiques" des signaux Xₛ et Yₛ dont l'écart est dans ledit domaine de tolérance. Il est à noter que le domaine de tolérance peut être nul, et dans ce cas le contrôle est la vérification d'une stricte égalité.

Le premier moniteur M1 commande l'aiguilleur AIG1 à l'état actif ACT lorsqu'il lui fournit un état haut H, et le commande à l'état repos REP lorsqu'il lui fournit un état bas B, sur l'entrée de commande EC.

En l'absence d'alimentation du voteur V1, l'aiguilleur AIG1 est à l'état repos REP, indépendamment de l'état du signal sur son entrée de commande EC.

Le fonctionnement du voteur V1 de la figure 1 est décrit ci-après, en regard de la table de vérité de la figure 2 : la sortie U du premier moniteur M1 est à l'état bas B lorsque les deux signaux Xₛ et Yₛ sur ses entrées X et Y sont différents, et à l'état haut H lorsque ces deux signaux sont identiques. Dans cette table de vérité, on a désigné par Eₛ1, Eₛ2 et Eₛ3 chacun des trois signaux d'entrée appliqués respectivement aux entrées E1, E2 et E3. De même, on désigne par Sₛ1 le signal de sortie apparaissant à la sortie S1 dudit voteur V1. On peut avoir les configurations suivantes :
1) le voteur V1 n'est pas alimenté par une source de puissance. Alors, l'aiguilleur AIG1 est à l'état repos REP, cette situation étant celle représentée sur la figure 1 ;
2) les trois signaux Eₛ1, Eₛ2 et Eₛ3 sont corrects, ce qui est indiqué par la lettre C de la table de vérité de la figure 2. Alors, le premier moniteur M1 détecte l'identité des signaux Eₛ2 et Eₛ3 et sa sortie U est à l'état haut H et commande l'aiguilleur AIG1 à l'état actif ACT. Il en résulte que, sur la sortie commune SC de l'aiguilleur AIG1, apparaît un signal de sortie Sₛ1 identique au signal Eₛ2 ;
3) le signal Eₛ1 est incorrect, ce qui est indiqué par la lettre I dans le tableau de la figure 2, alors que les signaux Eₛ2 et Eₛ3 sont corrects. Le premier moniteur M1, constatant l'identité des signaux Eₛ2 et Eₛ3, est à l'état haut H en sortie U et commande l'aiguilleur AIG1 à son état actif ACT. Le signal Sₛ1 est donc égal au signal Eₛ2 ;
4) si maintenant les signaux Eₛ1 et Eₛ3 sont corrects, mais que le signal Eₛ2 est incorrect, le premier moniteur M1 constate une différence entre les signaux Eₛ2 et Eₛ3, sa sortie U est alors à l'état bas B et l'aiguilleur AIG1 est à l'état repos REP ; le signal Sₛ1 est alors égal au signal Eₛ1 ;
5) de même, si les signaux Eₛ1 et Eₛ2 sont corrects, mais que le signal Eₛ3 est incorrect, la sortie U du premier moniteur M1 est à l'état bas B et l'aiguilleur AIG1 est à l'état repos REP, de sorte que le signal Sₛ1 est égal au signal Eₛ1 ;
6) si deux des signaux Eₛ1, Eₛ2, Eₛ3 sont incorrects et différents, un seul d'entre eux étant correct, la sortie U du premier moniteur M1 est à l'état bas B et l'aiguilleur AIG1 est à l'état repos REP, de sorte que le signal Sₛ1 est égal au signal Eₛ1 ;
7) enfin, si les trois signaux Eₛ1, Eₛ2, Eₛ3 sont incorrects et différents, le signal Sₛ1 est égal au signal incorrect Eₛ1.

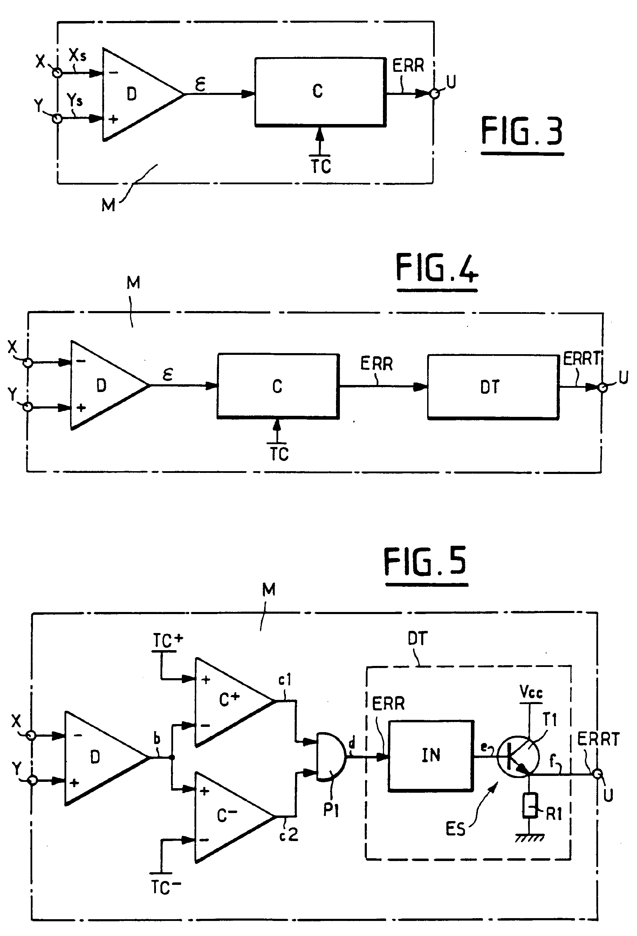

Le premier moniteur M1 peut, de plus, comporter, en sortie, un comparateur à seuil. La figure 3 montre le schéma de principe d'un tel moniteur M, apte à traiter des signaux analogiques ou numériques. Un moyen différenciateur D reçoit respectivement, sur les deux entrées X et Y, deux signaux Xₛ et Yₛ à comparer, et fournit, en sortie, un signal ε proportionnel à la différence de ces deux signaux. Ce signal est appliqué à une première entrée d'un comparateur à seuil C, recevant, sur une deuxième entrée, une valeur de seuil prédéterminée (TC), et fournissant, en sortie U, un signal ERR significatif du fait que le signal ε est d'amplitude supérieure au seuil.

La comparaison des signaux Xₛ et Yₛ appliqués sur les entrées X et Y du premier moniteur M est réalisée par des circuits analogiques et/ou numériques ou en logiciel, selon les applications désirées.

La sortie du comparateur à seuil C peut, de plus, être reliée à l'entrée d'un temporisateur DT, tel que représenté sur la figure 4, dont la sortie U fournit un signal d'erreur temporisé ERRT après que la sortie du comparateur C ait été au niveau bas, significatif d'une discordance entre les signaux d'entrée Xₛ et Yₛ, pendant au moins une durée Tₛ prédéterminée.

Comme on l'a mentionné ci-dessus, le voteur V peut être utilisé pour des signaux d'entrée Eₛ1, Eₛ2 et Eₛ3 de différents types. Sur la figure 5, on a représenté un mode de réalisation du premier moniteur M1 approprié à des signaux électriques analogiques, avec un comparateur à seuil C suivi du temporisateur DT.

Le moniteur M de la figure 5 comporte :
- un amplificateur différentiel D, jouant le rôle de moyen différenciateur D, dont les entrées sont respectivement reliées aux entrées X et Y dudit moniteur M ;
- un premier comparateur C⁺, dont l'entrée positive reçoit une tension représentative d'un seuil positif TC⁺ et dont l'entrée négative est reliée à la sortie dudit amplificateur différentiel D ;
- un second comparateur C⁻ , dont l'entrée positive est reliée à la sortie dudit amplificateur différentiel D et dont l'entrée négative reçoit une tension représentative d'un seuil négatif TC⁻ ;
- une première porte logique P1, de type ET, dont les deux entrées sont respectivement reliées aux sorties desdits premier et second comparateurs C⁺ et C⁻ ;
- un intégrateur IN, dont l'entrée est reliée à la sortie de la première porte logique P1 ; et
- un étage de sortie ES, comportant un transistor interrupteur T1 dont la base est reliée à la sortie de l'intégrateur IN, le collecteur à une tension d'alimentation Vcc et l'émetteur à la masse par l'intermédiaire d'une résistance R1 (le montage du transistor T1 représenté n'est donné qu'à titre d'illustration du fonctionnement de celui-ci et ne correspond pas obligatoirement au montage réel mis en oeuvre).

La sortie U du moniteur M est reliée à l'émetteur du transistor T1, de manière qu'en cas de coupure d'alimentation ou de destruction du transistor T1 en circuit ouvert, la sortie U du moniteur M soit à une tension voisine de celle de la masse, tension pouvant correspondre à l'état bas B, et ainsi qu'un aiguilleur AIG associé soit à l'état repos REP.

Le premier comparateur C⁺ délivre un signal d'amplitude constante (état haut) à sa sortie, lorsque le signal qu'il reçoit de l'amplificateur différentiel D est inférieur au seuil positif TC⁺ , et, de façon symétrique, le second comparateur C⁻ délivre un signal d'amplitude constante (état haut) à sa sortie, lorsque le signal qu'il reçoit de l'amplificateur différentiel D est supérieur au seuil négatif TC⁻, si bien que ces deux comparateurs C⁺ et C⁻ fournissent simultanément un état haut en sortie si le signal issu de l'amplificateur différentiel D est compris entre le seuil positif TC⁺ et le seuil négatif TC⁻, si bien que la première porte logique P1 fournit en sortie, dans ce cas seulement, un état haut.

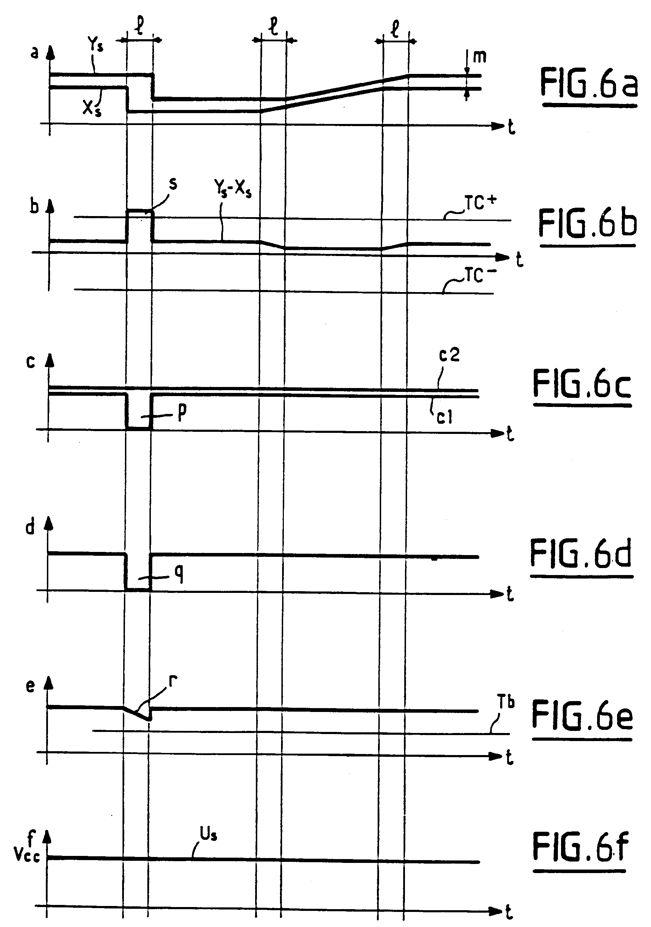

Pour illustrer le fonctionnement du moniteur M de la figure 5, on fait appel ci-après aux diagrammes des figures 6a à 6f, sur l'axe des abscisses desquels on a porté le temps t.

Le chronogramme de la figure 6a donne un exemple de signaux Xₛ et Yₛ, dont l'amplitude a est portée sur l'axe des ordonnées. On peut voir que les signaux Xₛ et Yₛ sont semblables, mais qu'ils sont déphasés de l et décalés en amplitude de m. Le chronogramme de la figure 6b représente le signal Yₛ-Xₛ, à la sortie de l'amplificateur différentiel D, l'amplitude b du signal Yₛ-Xₛ étant portée sur l'axe des ordonnées. On peut voir que, pour sa plus grande part, l'amplitude b du signal Yₛ-Xₛ est comprise entre les seuils TC⁺ et TC⁻ des comparateurs C⁺ et C⁻ , sauf en ce qui concerne la portion s, qui dépasse le seuil positif TC⁺. Il en résulte que, à leurs sorties respectives, le comparateur C⁺ délivre un signal d'amplitude haute constante c1, sauf en regard de la portion s où le niveau haut du signal c1 est interrompu (en p), et le comparateur C⁻ délivre également un signal d'amplitude haute constante c2 (figure 6c). Par suite, le signal d à la sortie de la première porte logique P1 est constant et au niveau haut, sauf en regard de l'interruption p, où il présente une interruption q (figure 6d). A la sortie de l'intégrateur IN, le signal e est donc constant et au niveau haut, sauf en regard de l'interruption q, où il présente une rampe r correspondant à la décharge lente dudit intégrateur IN. Si, comme cela est illustré sur la figure 6e, le signal e et sa rampe r sont supérieurs au seuil de blocage Tb du transistor T1, celui-ci est conducteur et la tension d'alimentation Vcc se retrouve en grande partie sur la sortie U du moniteur M (voir la figure 6f sur laquelle l'amplitude f du signal Uₛ est portée sur l'axe des ordonnées).

Le chronogramme de la figure 6f correspond à l'état haut H, pris comme étant une tension voisine de Vcc, de la sortie U du moniteur M.

On comprendra ainsi que, si l'amplitude b du signal Yₛ -Xₛ sort du couloir TC⁺ , TC⁻ (voir la figure 6b) pendant un temps suffisamment long, la rampe r du signal e passe au-dessous du seuil de blocage Tb du transistor T1 (figure 6e), de sorte que la conduction de celui-ci est bloquée et que le signal f devient nul. La sortie U du moniteur M est alors dans son état bas B.

Les tolérances sur les paramètres de détection (TC⁺, TC⁻ Tₛ) doivent être suffisamment "larges" pour éviter des déconnexions intempestives, mais doivent cependant être suffisamment "étroites" pour qu'un signal erroné en sortie pendant la durée Tₛ, ne soit pas gênant pour le système utilisant ledit voteur V.

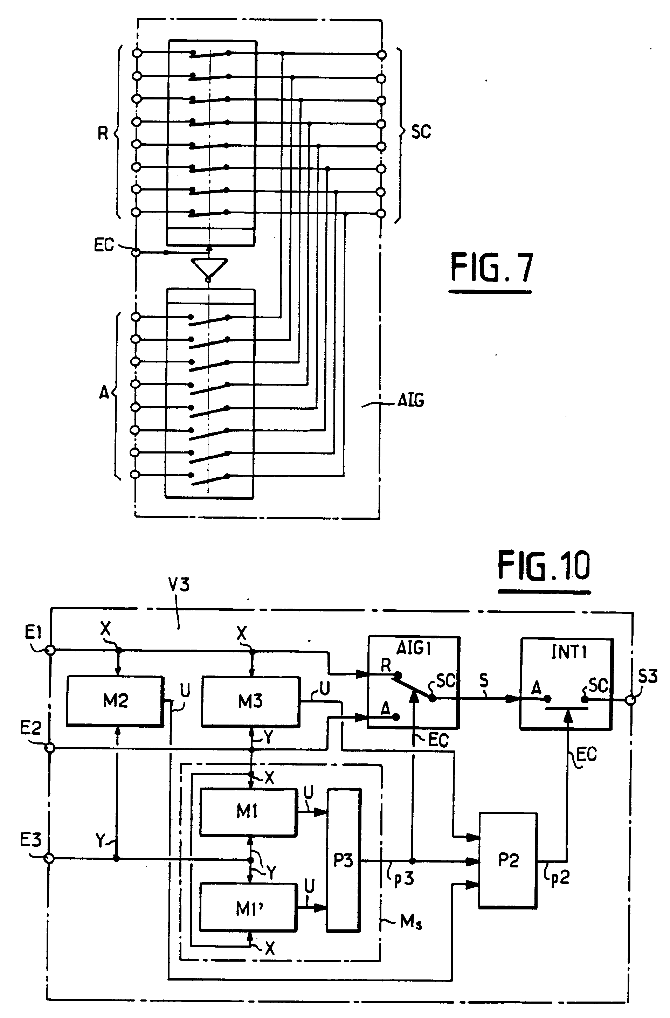

Pour ce qui est de l'aiguilleur AIG1, il peut être du type commutateur de signaux analogiques ou numériques. Il peut aussi comporter plusieurs commutateurs en parallèle, commandés à l'identique, permettant de transmettre des signaux analogiques ou numériques. Ainsi, la figure 7 représente un aiguilleur AIG parallèle à commande électrique, permettant de commuter des signaux codés sur 8 bits. Cet aiguilleur AIG peut être réalisé en utilisant des circuits logiques multiplexeurs parallèles ou des relais à position repos/ travail, ou des commutateurs optiques.

Le rôle du premier moniteur M1 est de détecter que le signal Eₛ2 ou le signal Eₛ3 est incorrect et, dans ce cas, il commute l'aiguilleur AIG1 à son état repos REP. Donc, en fonctionnement normal (aucune défaillance), le signal Eₛ2 est conduit jusqu'à la sortie S1. Dès la défaillance du signal Eₛ2 ou du signal Eₛ3, l'aiguilleur AIG1 se retrouve à l'état repos REP et le signal Eₛ1 est conduit jusqu'à la sortie S1.

De plus, on remarquera que si le premier moniteur M1 et/ou l'aiguilleur AIG1 sont défaillants, la continuité électrique est assurée et le signal de sortie Sₛ1 est formé par le signal Eₛ1 ou Eₛ2.

Ainsi, le voteur V1 assure bien sa fonction et constitue ainsi un sélecteur de signaux fiable. Il est donc particulièrement approprié à être utilisé dans le cas où le signal Eₛ1 provient d'une voie de secours qui, par exemple, engendre un signal ayant des performances plus restreintes en précision, mais qui est plus fiable que les signaux Eₛ2 et Eₛ3.

Par suite, le voteur V1 est utilisé, en fonctionnement normal, pour faire transiter, en le surveillant, le signal Eₛ2 vers la sortie S1, et, dans le cas d'une différence entre les signaux Eₛ2 et Eₛ3, pour transmettre le signal Eₛ1 à la sortie S1.

Cependant, le voteur V1 n'est pas protégé contre une défaillance du signal fiable Eₛ1, lorsque cette défaillance est double et qu'elle existe en même temps que celle de l'un et/ou l'autre des deux signaux Eₛ2 et Eₛ3 (voir les lignes 5, 6 et 8 de la table de vérité de la figure 2).

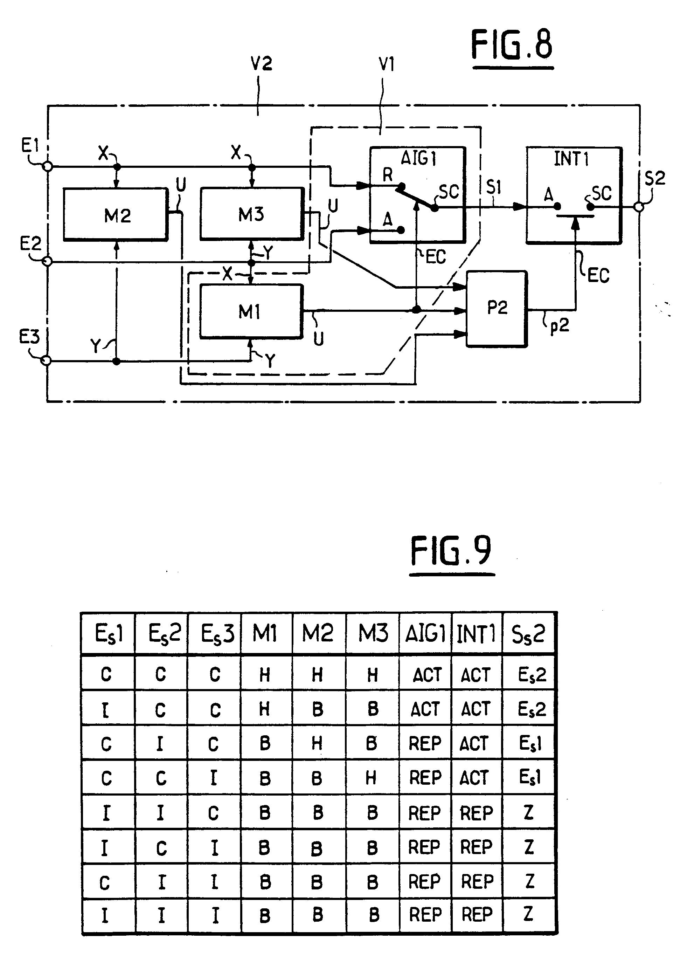

Aussi, pour pallier cet inconvénient, le voteur V1 peut être perfectionné comme cela est représenté sur la figure 8.

Le voteur V2, conforme à la présente invention et montré par la figure 8, comporte le voteur V1 décrit ci-dessus, dont les entrées E1, E2, E3 forment les trois entrées dudit voteur V2, qui, par ailleurs, est pourvu d'une sortie S2. En plus du voteur V1, le voteur V2 comporte :
- un interrupteur INT1, pourvu d'une entrée active A et d'une entrée de commande EC apte à mettre, ou non, ladite entrée A en relation avec une sortie commune SC selon que cet interrupteur INT1 est respectivement à l'état actif ou à l'état repos, en fonction du signal appliqué sur ladite entrée de commande EC, ladite entrée active A et ladite sortie commune SC dudit interrupteur INT1 étant respectivement reliées à ladite sortie S1 dudit voteur V1 et à la sortie S2 dudit voteur V2, c'est-à-dire que cet interrupteur INT1 peut avoir un état actif pour lequel sa sortie commune SC est reliée à son entrée active A, et un état repos pour lequel sa sortie SC n'est pas reliée ; il peut avoir la même constitution qu'un aiguilleur AIG1 qui n'aurait pas d'entrée de repos R ;
- un deuxième moniteur M2, de fonction identique à celle du premier moniteur M1, dont les deux entrées X et Y sont respectivement reliées aux première et troisième entrées E1 et E3 dudit voteur V2, apte à mesurer l'écart entre les premier et troisième signaux Eₛ1 et Eₛ3 ;
- un troisiène moniteur M3, de fonction identique à celle du premier moniteur M1 et dont les deux entrées X et Y sont respectivement reliées aux première et deuxième entrées E1 et E2, apte à mesurer l'écart entre les premier et deuxième signaux Eₛ1 et Eₛ2 ; et
- une deuxième porte logique P2 à trois entrées, de type OU, c'est-à-dire que toute entrée à l'état haut H force un état haut H en sortie, indépendamment de l'état des deux autres entrées, ses première, deuxième et troisième entrées étant respectivement reliées aux sorties U desdits moniteurs M1, M2 et M3 et sa sortie p2 commandant l'état de l'interrupteur INT1 par son entrée de commande EC.

Le fonctionnement du voteur V2 de la figure 8 est décrit ci-après, en regard de la table de vérité de la figure 9, qui inclut celle de la figure 2. Dans cette table de vérité, le signal de sortie est désigné par la référence Sₛ2. On reprend ci-après les différents cas pouvant se produire :
1) le voteur V2 n'est pas alimenté par une source de puissance. Alors, l'interrupteur INT1 est à l'état repos REP, de sorte que la sortie S2 est isolée des entrées E1, E2, E3, cette situation étant celle représentée par la figure 8 ;
2) les trois signaux Eₛ1, Eₛ2 et Eₛ3 sont corrects. On a vu qu'alors le signal de sortie Sₛ1 du voteur V1 est égal au signal Eₛ2. Les moniteurs M1, M2 et M3 constatent l'identité des signaux Eₛ1, Eₛ2 et Eₛ3, leurs sorties U sont à l'état haut H, et la sortie p2 de la deuxième porte logique P2 force l'interrupteur INT1 à l'état actif ACT. Le signal de sortie Sₛ2 est donc formé par le signal Eₛ2 ;
3) le signal Eₛ1 est incorrect, alors que les signaux Eₛ2 et Eₛ3 sont corrects. On a vu qu'alors le signal Sₛ1 est égal au signal Eₛ2, les sorties U des moniteurs M2 et M3 sont à l'état bas B, mais la sortie U du premier moniteur M1 est à l'état haut H. Il en résulte que le premier moniteur M1, à travers la deuxième porte logique P2, force l'interrupteur INT1 à l'état actif ACT. Le signal de sortie Sₛ2 est donc formé par le signal Eₛ2 ;
4) si maintenant les signaux Eₛ1 et Eₛ3 sont corrects, mais que le signal Eₛ2 est incorrect, on a vu que le signal Sₛ1 est égal au signal Eₛ1. La sortie U du deuxième moniteur M2 est alors à l'état haut H et force l'interrupteur INT1 à l'état actif ACT à travers la deuxième porte logique P2. Le signal de sortie Sₛ2 est alors formé par le signal Eₛ1 ;
5) de même, si les signaux Eₛ1 et Eₛ2 sont corrects, mais que le signal Eₛ3 est incorrect, on a vu que le signal Sₛ1 est formé par le signal Eₛ1. La sortie U du troisième moniteur M3 est alors à l'état haut H et force l'interrupteur INT1 à l'état actif ACT, à travers la deuxième porte logique P2. Le signal Sₛ2 est donc formé par le signal Eₛ1;
6) si deux des signaux Eₛ1, Eₛ2, Eₛ3 sont incorrects, un seul d'entre eux étant correct, on a vu que le signal Sₛ1 est formé par le signal Eₛ1. Cependant, les sorties U des trois moniteurs M1, M2, M3 sont à l'état bas B, de sorte que l'interrupteur INT1 est commandé à l'état repos REP. La sortie S2 est alors isolée des entrées E1, E2 et E3 ; dans la table de vérité de la figure 9, l'isolement de la sortie S2 est symbolisé par la lettre Z ;
7) enfin, si les trois signaux Eₛ1, Eₛ2, Eₛ3 sont incorrects et différents, on a vu que le signal Sₛ1 est formé par le signal Eₛ1 ; mais, là encore, les sorties U des trois moniteurs M1, M2 et M3 sont à l'état bas B, de sorte que la sortie S2 est isolée des entrées E1, E2, E3.

On remarquera que, lorsque l'un des trois signaux Eₛ1, Eₛ2 et Eₛ3 est incorrect (lignes 2, 3 et 4 de la figure 9 ), l'état de la sortie des moniteurs M1, M2 et M3 est représentatif de l'identité du signal incorrect. En effet :
1) si les sorties U des moniteurs M2 et M3 sont à l'état bas B, alors que la sortie U du premier moniteur M1 est à l'état haut H, c'est le signal Eₛ1 (que ne reçoit pas ce premier moniteur M1) qui est incorrect ;
2) si les sorties U des moniteurs M1 et M3 sont toutes deux à l'état bas B, alors que la sortie U du deuxième moniteur M2 est à l'état haut H, c'est le signal Eₛ2 qui est incorrect ;
3) enfin, si les sorties U des moniteurs M1 et M2 sont à l'état bas B, alors que la sortie U du troisième moniteur M3 est à l'état haut H, c'est le signal Eₛ3 qui est incorrect.

Ainsi, il est possible, en surveillant l'état des moniteurs M1, M2 et M3, de connaître l'identité du signal d'entrée Eₛ1, Eₛ2, Eₛ3 incorrect et donc d'identifier le sous-système qui l'engendre, le moniteur qui est le seul à avoir une sortie à l'état haut H indiquant ainsi que c'est le signal d'entrée qu'il ne reçoit pas qui est incorrect.

Le rôle des moniteurs M1, M2, M3 et de la deuxième porte logique P2 est d'isoler la sortie S2, lorsque deux au moins des trois signaux d'entrée Eₛ1, Eₛ2, Eₛ3 sont incorrects. En effet, lorsqu'au moins deux signaux d'entrée sont incorrects et différents, les trois moniteurs M1, M2 et M3 détectent chacun une discordance et aucun ne commande à l'état actif ACT, à travers la deuxième porte logique P2, l'interrupteur INT1, qui a donc l'état repos REP. Lorsqu'un seul signal d'entrée est incorrect, seulement deux moniteurs détectent une discordance et, dans ce cas, le moniteur ne détectant pas de discordance force l'interrupteur INT1 à l'état actif ACT.

Le voteur V2 est donc tolérant à la défaillance d'un des trois signaux d'entrée et il isole sa sortie dès que deux signaux d'entrée sont défaillants dans un état différent.

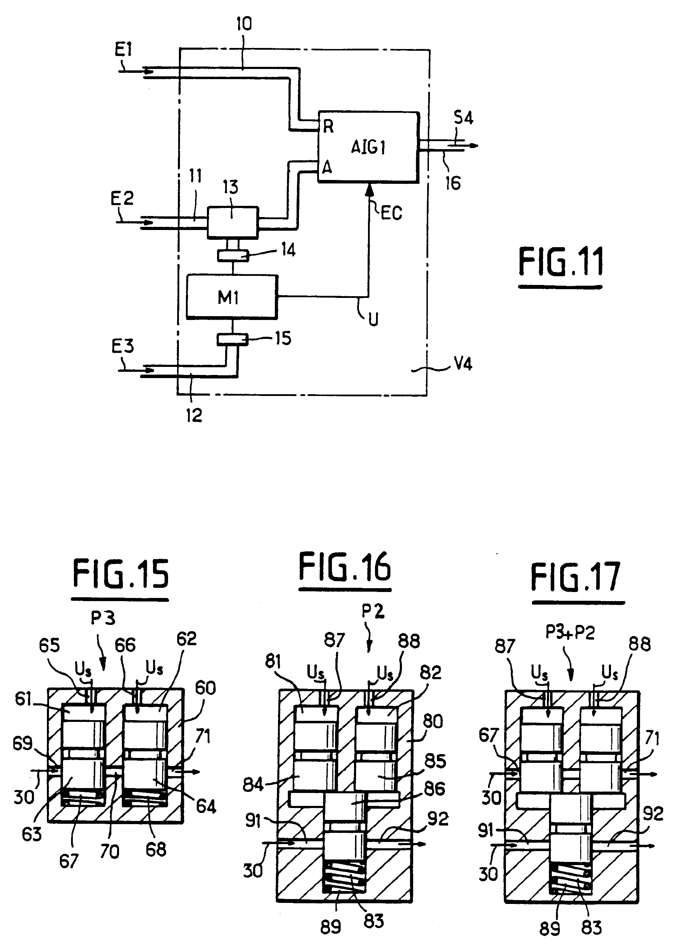

Par ailleurs, on constatera que, lors d'une simple défaillance du premier moniteur M1 qui bloquerait sa sortie U à l'état haut H, le voteur V2 bloque l'aiguilleur AIG1 et l'interrupteur INT1 à l'état actif ACT, et, de ce fait, la sortie S2 du voteur V2 fournit le signal Eₛ2, ce qui peut être critique si ce signal Eₛ2 est incorrect. Pour remédier à cet inconvénient, il peut être avantageux de prévoir, comme cela est représenté sur la figure 10, un quatrième moniteur M1′, dont les entrées sont branchées en parallèle sur celles du premier moniteur M1.

Le voteur V3 de cette figure 10 comprend le voteur V2 de la figure 8 et il comporte de plus :
- le quatrième moniteur M1′ de fonction identique à celle des moniteurs M1, M2 et M3, dont les deux entrées X, Y sont respectivement reliées aux entrées E2 et E3, donc en parallèle sur celles du premier moniteur M1 ; et
- une troisième porte logique P3, à deux entrées, de type ET, c'est-à-dire que la sortie de cette troisième porte logique ET, P3, n'est à l'état haut H que si les deux entrées sont simultanément à l'état haut H, dont une entrée est reliée à la sortie U dudit quatrième moniteur M1′.

Par ailleurs, la sortie U du premier moniteur M1, au lieu d'être reliée à la première entrée de la deuxième porte P2 et à l'aiguilleur AIG1, comme cela est le cas dans le voteur V2 de la figure 8, est reliée à l'autre entrée de la troisième porte logique P3. En outre, la sortie p3 de cette troisième porte P3 est, d'une part, reliée à la première entrée de la deuxième porte logique P2 et, d'autre part, est reliée à l'entrée de commande EC de l'interrupteur INT1.

Ainsi, le signal sur la sortie p3 de la troisième porte logique P3 ne commande l'aiguilleur AIG1 et l'interrupteur INT1 à l'état actif que lorsque les deux moniteurs M1 et M1′ sont simultanément sains et détectent l'identité des signaux Eₛ2 et Eₛ3. Il n'y a donc aucun risque que le premier moniteur M1, défaillant, dont la sortie serait maintenue à l'état haut H, puisse transmettre à la sortie S3 un signal Eₛ2, lui-même incorrect.

L'ensemble constitué par les deux moniteurs M1 et M1′ jumelés et la troisième porte logique P3 constitue un moniteur sécurisé Ms ayant la même fonction qu'un moniteur tel que décrit précédemment, mais dont la sortie p3 risque beaucoup moins de rester bloquée à l'état activant l'aiguilleur AIG1, en cas de défaillance matérielle. La duplication du moniteur M1 peut s'étendre à plus d'un autre moniteur M′1, en ajoutant des entrées à la troisième porte logique P3.

Un tel moniteur sécurisé Ms peut être utilisé en tant que tel dans tout montage nécessitant un ou des moniteurs à haute sécurité.

Les modes de réalisation du voteur, montrés par les figures 1, 8 et 10, ont été décrits, à l'aide des figures 4 et 6a à 6f, comme étant de nature électrique, les deuxième et troisième portes logiques P2 et P3 étant de type connu. Elles peuvent être réalisées au moyen de circuits intégrés ou bien à partir de montages à diodes.

Sur la figure 11, on a représenté un mode de réalisation d'un tel voteur V₁ sous forme électro-optique V4. Dans ce cas, l'aiguilleur AIG1 à deux voies est un multiplexeur optique à commande électrique, alors que le premier moniteur M1 est de type électrique, tel que décrit précédemment.

Les entrées optiques E1 et E2 sont respectivement reliées aux entrées de repos R et active A de l'aiguilleur optique AIG1 par des fibres optiques 10 et 11, tandis que les entrées optiques E2 et E3 sont respectivement reliées aux entrées X et Y du premier moniteur M1 par la fibre optique 11 et une fibre optique 12.

Sur la fibre optique 11 est prévu un coupleur optique 13 en "Y" dont la branche dérivée commande une cellule photoélectrique 14 constituant l'entrée X du premier moniteur M1, tandis que son entrée Y est constituée par une cellule photo-électrique 15 recevant la fibre optique 12.

La sortie S4 de ce voteur V4 est formée par une fibre optique 16 reliée à la sortie SC de l'aiguilleur AIG1. La sortie U du premier moniteur M1 est reliée à l'entrée de commande EC de l'aiguilleur AIG1 et commande l'état de cet aiguilleur AIG1.

Il est possible de réaliser un tel voteur V4 électro-optique comportant plusieurs fibres en parallèle, en dupliquant les fibres optiques, les coupleurs et interfaces électro-optiques et en utilisant des aiguilleurs optiques capables de commuter plusieurs fibres, par exemple des relais électro-optiques repos/travail à plusieurs fibres en sortie, comme schématisé sur la figure 7, ou une association de plusieurs tels relais à une seule fibre de sortie.

Un tel voteur V4 peut évidemment comporter les diverses adjonctions de seuil et temporisation précédemment exposées.

On constate aisément que le fonctionnement de ce voteur électro-optique V4 est identique à celui du voteur V1 décrit précédemment.

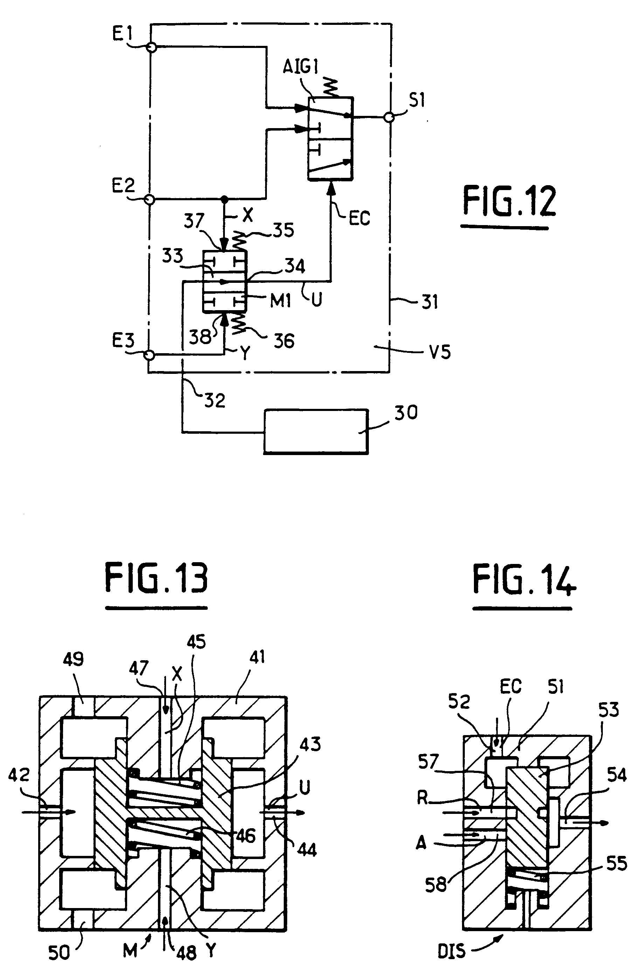

Sur la figure 12, on a représenté un mode de réalisation d'un tel voteur V1 sous forme hydraulique (ou encore pneumatique) V5 comportant une source de fluide sous pression 30 appliquée à un boîtier 31 comportant une entrée d'alimentation 32.

On comprend facilement que le premier moniteur M1, pour une réalisation hydraulique, peut consister, schématiquement, en un tiroir 33 faisant communiquer l'entrée d'alimentation 32 et la sortie U 34 de ce premier moniteur M1, uniquement lorsqu'il est en position centrale. Ce tiroir 33 est maintenu dans cette position centrale grâce à deux ressorts antagonistes 35 et 36 commandés par les deux signaux Xₛ et Yₛ contrôlés, appliqués aux entrées X et Y, respectivement repérées 37 et 38, ceci tant que les signaux contrôlés Eₛ2 et Eₛ3 sont corrects, et est repoussé d'un côté ou de l'autre, interrompant la communication entre l'entrée d'alimentation 32 et la sortie U 34 du premier moniteur M1, dès qu'une différence se présente entre les deux signaux Eₛ2 et Eₛ3 contrôlés par ce premier moniteur M1.

La figure 13 présente schématiquement un exemple de réalisation d'un moniteur pneumatique M1, formé par un distributeur M, constitué d'un boîtier 41, d'un orifice d'entrée d'alimentation 42 et comportant un piston mobile 43 se déplaçant dans ce boîtier 41 et commandant la mise sous pression d'un orifice de sortie 44, piston soumis à l'action antagoniste de deux ressorts 45 et 46, comme dans le cas du moniteur hydraulique M1 précédent, et commandé par les deux signaux Xₛ et Yₛ contrôlés appliqués aux entrées X et Y, respectivement repérées 47 et 48. Suivant les valeurs respectives des pressions des signaux Xₛ et Yₛ, le piston 43 met en communication, l'un avec l'autre, l'orifice d'entrée 42 d'alimentation du boîtier 41 recevant la pression de la source 30 et l'orifice de sortie 44 dudit boîtier 41 constituant la sortie U du moniteur M, ou bien met cette sortie U 44 en communication avec l'atmosphère à travers des orifices 49 ou 50.

Tout comme pour une réalisation électronique, il est possible de créer un seuil sur l'action du moniteur M, en ayant des ressorts 45 et 46 non fortement comprimés à l'état d'équilibre du moniteur M, ce qui nécessite la fourniture d'un travail pour comprimer l'un des ressorts 45 ou 46, l'autre ressort ne compensant pas l'effort de compression par sa propre détente.

De même, l'action du moniteur M peut être temporisée par utilisation, par exemple, d'orifices de faible diamètre, ne permettant qu'un passage à faible débit du fluide.

De plus, l'aiguilleur AIG1 à deux voies est constitué par un distributeur DIS, représenté sur la figure 14, formé d'un boîtier 51 comportant un orifice d'entrée de commande EC, repéré 52, et un piston mobile 53 apte à se déplacer dans ce boîtier 51, sous l'action de la pression transmise par ladite entrée de commande EC 52 à laquelle s'oppose celle d'un ressort 55. Suivant la valeur de la pression du signal appliqué sur ladite entrée de commande EC, le piston 53 met en communication l'un ou l'autre de deux orifices d'entrée de signal 57 et 58 du boîtier 51 avec l'orifice de sortie 54, lesdits orifices d'entrée de signal 57 et 58 correspondant respectivement aux entrées de repos R et active A.

L'aiguilleur AIG hydraulique ou pneumatique décrit ci-dessus peut être rendu apte à commuter plusieurs signaux en parallèle, en dupliquant les éléments nécessaires à chaque signal.

Là encore, on constate facilement que le fonctionnement du voteur V5 de la figure 12 est semblable à celui du voteur V1 décrit précédemment.

L'interrupteur INT1, précédemment décrit, peut être réalisé, dans chaque technologie exposée, de la même façon que l'aiguilleur AIG1 correspondant, sans entrée de repos R.

Sur les figures 15 et 16, on a représenté des exemples de réalisation hydraulique ou pneumatique desdites troisième porte logique ET, P3, et deuxième porte logique OU, P2.

La troisième porte logique ET, P3, représentée sur la figure 15, comporte un boîtier 60, séparé intérieurement en deux chambres 61 et 62, dans chacune desquelles est logé un piston 63 ou 64 comportant une gorge. Ces chambres 61 et 62 comportent chacune un orifice de commande, respectivement 65, 66, chacun respectivement relié à la sortie U de l'un des moniteurs M1 et M1′, de façon que lesdits pistons 63 et 64 subissent l'action des signaux Uₛ issus des sorties U correspondantes à laquelle s'oppose l'action de deux ressorts, respectivement 67 et 68. Par ailleurs, le boîtier 60 comporte, dans la chambre 61, un orifice 69 relié à la source 30, un orifice intermédiaire 70, reliant les chambres 61 et 62, et un orifice 71 de sortie dans la chambre 62. L'orifice 71 constitue la sortie de la troisième porte logique ET, P3, et il n'y apparaît un signal de pression que lorsque les deux pistons 63 et 64, repoussés par la pression due aux signaux Uₛ issus des sorties U, parvenant par les orifices de commande 65 et 66, mettent en communication les orifices 69 et 71 à travers lesdits pistons 63 et 64 et l'orifice intermédiaire 70.

La deuxième porte logique OU, P2, représentée sur la figure 16, ne comporte, à des fins de simplification du dessin, que deux entrées, et non pas trois comme cela est montré par la figure 4. Il est cependant clair que, sur le même principe, il est possible de réaliser une deuxième porte logique P2 à trois entrées. Cette deuxième porte logique OU, P2, comporte un boîtier 80, séparé intérieurement en trois chambres 81, 82 et 83, dans chacune desquelles est logé un piston 84, 85, 86, muni d'une gorge. Les chambres 81 et 82 comportent respectivement un orifice de commande 87 et 88, relié respectivement à la sortie U de deux moniteurs, de façon que les pistons 84 et 85 subissent l'action des signaux U correspondants. Ces pistons 84 et 85 sont au contact d'une extrémité du piston 86, tandis qu'un ressort 89 est en contact avec l'autre extrémité du piston 86 et s'oppose à l'action des pistons 84 et 85.

Par ailleurs, le boîtier 80 comporte des orifices 91 et 92 susceptibles d'être mis en communication l'un avec l'autre, à travers le piston 86, l'orifice 91 étant relié à la source 30. L'orifice 92 constitue la sortie de la deuxième porte logique OU, P2, et il n'y apparaît un signal de pression que lorsque l'un des deux pistons 84 ou 85, repoussé par la pression due aux signaux Uₛ parvenant par les orifices de commande 87 et 88, amène le piston 86 à mettre en communication les orifices 91 et 92.

Sur la figure 17, on a représenté un dispositif logique fournissant à la fois la fonction de la deuxième porte logique OU, P2, et celle de la troisième porte logique ET, P3, des figures respectives 15 et 16.

## Revendications

1. Voteur (V) comportant une sortie (S), ainsi qu'une première entrée (E1), une deuxième entrée (E2) et une troisième entrée (E3) recevant respectivement un premier signal (E_{S}1), un deuxième signal (E_{S}2) et un troisième signal (E_{S}3), ledit voteur (V) comportant :
- un aiguilleur (AIG1) à deux voies, pourvu d'une entrée active (A), d'une entrée de repos (R), d'une entrée de commande (EC) apte à recevoir un signal de commande forçant, selon son état, ledit aiguilleur (AIG1) à un état actif (ACT) ou à un état repos (REP), et d'une sortie commune (SC), ladite entrée de repos (R) et ladite entrée active (A) dudit aiguilleur (AIG1) étant respectivement reliées auxdites première et deuxième entrées (E1, E2) dudit voteur (V), tandis que ladite sortie commune (SC) dudit aiguilleur (AIG1) est reliée à ladite sortie (S) dudit voteur (V) ; et
- un premier moniteur (M1) dont les entrées sont reliées aux entrées dudit voteur (V),
caractérisé en ce que :
- ledit aiguilleur (AIG1) est unique et sa sortie commune (SC) est directement reliée à la sortie (S) dudit voteur, pour appliquer sur cette dernière sortie (S) soit le signal appliqué sur l'entrée active (A) lorsque ledit aiguilleur (AIG1) est à l'état actif (ACT), soit le signal appliqué sur l'entrée de repos (R) lorsque ledit aiguilleur (AIG1) est à l'état repos (REP) ; et
- ledit premier moniteur (MI) comporte uniquement deux entrées (X, Y) respectivement reliées auxdites deuxième et troisième entrées (E2, E3) dudit voteur (V) et est apte à mesurer l'écart entre lesdits deuxième signal (E_{S}2) et troisième signal (Eₛ3), la sortie (U) dudit premier moniteur (MI) étant reliée à l'entrée de commande (EC) dudit aiguilleur (AIG1) pour commander l'état dudit aiguilleur (AIG1) en fonction dudit écart.

2. Voteur (V) selon la revendication 1, dans lequel ledit premier moniteur (M1) est du type apte à traiter des signaux analogiques ou numériques, séries ou parallèles,
caractérisé en ce que ledit premier moniteur (M1) comprend :
- des moyens différenciateurs (D) pour mesurer la différence entre les signaux appliqués aux entrées (X, Y) dudit premier moniteur (M1) ;
- des moyens comparateurs (C), pour comparer ladite différence à un seuil prédéterminé (TC⁺, TC⁻) et engendrer un signal d'erreur si la valeur absolue de ladite différence est supérieure à la valeur absolue dudit seuil (TC⁺, TC⁻ ).

3. Voteur (V) selon la revendication 1 ou 2, caractérisé en ce que des moyens temporisateurs (DT) sont interposés en série sur la sortie (U) du premier moniteur (M1).

4. Voteur (V) selon l'une quelconque des revendications 1 à 3, caractérisé en ce que l'aiguilleur (AIG1) à deux voies est du type commutateur électrique ou dispositif de commutation électrique constitué d'un ou plusieurs éléments de commutation identiques disposés en parallèle.

5. Voteur (V) selon l'une quelconque des revendications 1 à 3, caractérisé en ce que l'aiguilleur (AIG1) à deux voies est du type multiplexeur optique à commande électrique ou commutateur optique à commande électrique constitué de plusieurs éléments de commutation optique identiques disposés en parallèle.

6. Voteur (V) selon l'une quelconque des revendications 1 à 3, caractérisé en ce que l'aiguilleur (AIG1) à deux voies est du type commutateur hydraulique ou pneumatique ou commutateur hydraulique ou pneumatique constitué de plusieurs éléments de commutation identiques disposés en parallèle.

7. Voteur (V) selon la revendication 6, dans lequel ledit premier moniteur (M1) est apte à traiter des signaux de pression fluide, caractérisé en ce que ledit premier moniteur (M1) comporte un organe (43) soumis à l'action antagoniste des signaux apparaissant aux entrées de signal (X, Y) dudit premier moniteur (M1) et commandant le passage de fluide entre une source de pression (30) et la sortie (U) dudit premier moniteur (M1).

8. Voteur selon l'une des revendications 6 ou 7, caractérisé en ce qu'il comporte au moins une deuxième porte logique OU (P2) ou une troisième porte logique ET (P3) réalisée à l'aide d'au moins un piston.

9. Voteur (V3) selon l'une quelconque des revendications 1 à 8, caractérisé en ce que ledit premier moniteur (M1) est un moniteur sécurisé (Ms) comportant au moins deux moniteurs (M1, M1′) jumelés dont les entrées (X, Y) sont respectivement branchées en parallèle, et dont les sorties (U) sont respectivement reliées aux entrées d'une troisième porte logique (P3) à deux entrées, de type ET, dont la sortie (p3) est apte à fournir un signal dont un état correspond en propre à la détection de l'identité des deux signaux appliqués sur lesdites entrées (X, Y) des moniteurs lorsque lesdits deux moniteurs (M1, M1′) jumelés fournissent chacun en sortie (U) un tel signal de détection d'identité, ladite sortie (p3) de cette troisième porte (P3) fournissant un signal d'état différent dans les autres cas.

10. Voteur (V2) selon l'une quelconque des revendications 1 à 9, caractérisé en ce qu'il comporte, de plus :
- un interrupteur (INT1) pourvu d'une entrée active (A), d'une entrée de commande (EC) apte à recevoir un signal de commande forçant, selon son état, ledit interrupteur (INT1) à un état actif (ACT) ou à un état repos (REP), et d'une sortie commune (SC), ladite entrée active (A) et ladite sortie commune (SC) dudit interrupteur (INT1) étant respectivement reliées à ladite sortie commune (SC) dudit aiguilleur (AIG1) et à la sortie (S2) dudit voteur (V2) ;
- un deuxième moniteur (M2), de fonction identique à celle du premier moniteur (M1), dont les deux entrées (X, Y) sont respectivement reliées auxdites première et troisième entrées (E1, E3) dudit voteur (V2), apte à mesurer l'écart entre lesdits premier signal (Eₛ1) et troisième signal (Eₛ3) ;
- un troisième moniteur (M3), de fonction identique à celle du premier moniteur (M1), dont les entrées (X, Y) sont respectivement reliées auxdites première et deuxième entrées (E1, E2) dudit voteur (V2), apte à mesurer l'écart entre lesdits premier signal (Eₛ1) et deuxième signal (Eₛ2); et
- une deuxième porte logique (P2) à trois entrées, de type OU, dont la sortie (p2) est apte à fournir un signal dont un état correspond en propre à la détection de l'identité des deux signaux appliqués sur lesdites entrées (X, Y) d'un moniteur lorsque l'un au moins desdits moniteurs (M1, M2, M3) fournit en sortie (U) un tel signal de détection d'identité, ladite sortie (p2) de cette deuxième porte logique (P2) fournissant un signal d'état différent dans l'autre cas, les entrées de ladite deuxième porte logique OU (P2) étant respectivement reliées aux sorties (U) desdits premier (M1), deuxième (M2) et troisième (M3) moniteurs, et sa sortie (p2) étant reliée à l'entrée de commande (EC) dudit interrupteur (INT1) et étant susceptible de commander l'état de cet interrupteur (INT1).

## Patentansprüche

1. Auswahlvorrichtung (V) mit einem Ausgang (S) sowie einem ersten Eingang (E1), einem zweiten Eingang (E2) und einem dritten Eingang (E3), an die ein erstes Signal (Eₛ1), ein zweites Signal (Eₛ2) bzw. ein drittes Signal (Eₛ3) gelangen, wobei die Auswahlvorrichtung (V) umfaßt:
- eine Zweiwegweiche (AIG1) mit einem aktiven Eingang (A), einem Ruheeingang (R), einem Steuereingang (EC), an den ein Steuersignal angelegt werden kann, das die Weiche (AIG1) entsprechend seinem Zustand in einen aktiven Zustand (ACT) oder einen Ruhezustand (REP) setzt, und einem gemeinsamen Ausgang (SC), wobei der Ruheeingang (R) und der aktive Eingang (A) der Weiche (AIG1) mit dem ersten bzw. zweiten Eingang (E1, E2) der Auswahlvorrichtung (V) verbunden sind, während der gemeinsame Ausgang (SC) der Weiche (AIG1) mit dem Ausgang (S) der Auswahlvorrichtung (V) verbunden ist; und
- einen ersten Monitor (M1), dessen Eingänge mit den Eingängen der Auswahlvorrichtung (V) verbunden sind,
dadurch gekennzeichnet, daß:
- die Weiche (AIG1) nur einmal vorhanden und ihr gemeinsamer Ausgang (SC) direkt mit dem Ausgang (S) der Auswahlvorrichtung verbunden ist, um an diesen letzten Ausgang (S) entweder das Signal am aktiven Eingang (A), wenn sich die Weiche (AIG1) im aktiven Zustand (ACT) befindet, oder das Signal am Ruheeingang (R) anzulegen, wenn sich die Weiche (AIG1) im Ruhezustand (REP) befindet; und
- der erste Monitor (M1) nur zwei Eingänge (X, Y) hat, die mit dem zweiten bzw. dritten Eingang (E2, E3) der Auswahlvorrichtung (V) verbunden sind, und die Abweichung zwischen dem zweiten Signal (Eₛ2) und dem dritten Signal (Eₛ3) messen kann, wobei der Ausgang (U) des ersten Monitors (M1) mit dem Steuereingang (EC) der Weiche (AIG1) verbunden ist, um den Zustand der Weiche (AIG1) in Abhängigkeit von der Abweichung steuern zu können.

2. Auswahlvorrichtung (V) nach Anspruch 1, bei der der erste Monitor (M1) derart ist, daß er analoge oder digitale, serielle oder parallele Signale verarbeiten kann,
dadurch gekennzeichnet, daß der erste Monitor (M1) umfaßt:
- Differenziermittel (D) zur Messung der Differenz zwischen den Signalen an den Eingängen (X, Y) des ersten Monitors (M1);
- Komparatoren (C) zum Vergleich der Differenz mit einer vorbestimmten Schwelle (TC⁺, TC⁻) und zur Erzeugung eines Fehlersignals, wenn der absolute Wert der Differenz größer als der absolute Wert der Schwelle (TC⁺, TC⁻) ist.

3. Auswahlvorrichtung (V) nach Anspruch 1 oder 2, dadurch gekennzeichnet, daß Verzögerungsmittel (DT) am Ausgang (U) des ersten Monitors (M1) in Reihe geschaltet sind.

4. Auswahlvorrichtung (V) nach einem der Ansprüche 1 bis 3, dadurch gekennzeichnet, daß die Zweiwegweiche (AIG1) von der Art eines elektrischen Schalters oder einer elektrischen Schaltvorrichtung ist, die aus einem oder mehreren parallelen identischen Schaltelementen besteht.

5. Auswahlvorrichtung (V) nach einem der Ansprüche 1 bis 3, dadurch gekennzeichnet, daß die Zweiwegweiche (AIG1) von der Art eines elektrisch gesteuerten optischen Multiplexers oder eines elektrisch gesteuerten optischen Schalters ist, der aus mehreren parallelen identischen optischen Schaltelementen besteht.

6. Auswahlvorrichtung (V) nach einem der Anspüche 1 bis 3, dadurch gekennzeichnet, daß die Zweiwegweiche (AIG1) von der Art eines hydraulischen oder pneumatischen Schalters oder eines hydraulischen oder pneumatischen Schalters, der aus mehreren parallelen identischen Schaltelementen besteht, ist.

7. Auswahlvorrichtung (V) nach Anspruch 6, bei der der erste Monitor (M1) Druckmittelsignale verarbeiten kann, dadurch gekennzeichnet, daß der erste Monitor (M1) ein Organ (43) hat, das der Gegenwirkung der Signale an den Signaleingängen (X, Y) des ersten Monitors (M1) ausgesetzt ist und den Druckmitteldurchfluß zwischen einer Druckquelle (30) und dem Ausgang (U) des ersten Monitors (M1) steuert.

8. Auswahlvorrichtung nach einem der Ansprüche 6 oder 7, dadurch gekennzeichnet, daß sie mindestens ein zweites ODER-Gatter (P2) oder ein drittes UND-Gatter (P3) hat, das mit mindestens einem Kolben ausgeführt ist.

9. Auswahlvorrichtung (V3) nach einem der Ansprüche 1 bis 8, dadurch gekennzeichnet, daß der erste Monitor (M1) ein gestützter Monitor (Ms) mit mindestens zwei gekoppelten Monitoren (M1, M1′) ist, deren Eingänge (X, Y) jeweils parallelgeschaltet sind und deren Ausgänge (U) jeweils mit den Eingängen eines dritten Gatters (P3) mit zwei Eingängen des UND-Typs verbunden sind, dessen Ausgang (p3) ein Signal abgeben kann, dessen einer Zustand an sich der Erfassung der Identität der beiden Signale an den Eingängen (X, Y) der Monitore entspricht, wenn die beiden gekoppelten Monitore (M1, M1′) jeweils am Ausgang (U) ein derartiges Identitätserfassungssignal abgeben, wobei der Ausgang (p3) dieses dritten Gatters (P3) in den anderen Fällen ein Signal mit einem anderen Zustand abgibt.

10. Auswahlvorrichtung (V2) nach einem der Ansprüche 1 bis 9, dadurch gekennzeichnet, daß sie außerdem umfaßt:
- einen Schalter (INT1) mit einem aktiven Eingang (A), einem Steuereingang (EC) für ein Steuersignal, das den Schalter (INT1) entsprechend seinem Zustand in einen aktiven Zustand (ACT) oder in einen Ruhezustand (REP) setzt, und einem gemeinsamen Ausgang (SC), wobei der aktive Eingang (A) und der gemeinsame Ausgang (SC) des Schalters (INT1) mit dem gemeinsamen Ausgang (SC) der Weiche (AIG1) bzw. dem Ausgang (S2) der Auswahlvorrichtung (V2) verbunden sind;
- einen zweiten Monitor (M2) mit gleicher Funktion wie der erste Monitor (M1), dessen beide Eingänge (X, Y) mit dem ersten bzw. dritten Eingang (E1, E3) der Auswahlvorrichtung (V2) verbunden sind und der die Abweichung zwischen dem ersten Signal (Eₛ1) und dem dritten Signal (Eₛ3) messen kann;
- einen dritten Monitor (M3) mit gleicher Funktion wie der erste Monitor (M1), dessen Eingänge (X, Y) mit dem ersten bzw. zweiten Eingang (E1, E2) der Auswahlvorrichtung (V2) verbunden sind und der die Abweichung zwischen dem ersten Signal (Eₛ1) und dem zweiten Signal (Eₛ2) messen kann; und
- ein zweites Gatter (P2) mit drei Eingängen des ODER-Typs, dessen Ausgang (p2) ein Signal abgeben kann, von dem ein Zustand an sich der Erfassung der Identität der Signale an den Eingängen (X, Y) eines Monitors entspricht, wenn mindestens der eine der Monitore (M1, M2, M3) am Ausgang (U) ein derartiges Identitätserfassungssignal abgibt, wobei der Ausgang (p2) dieses zweiten Gatters (P2) im anderen Fall ein Signal mit anderem Zustand abgibt, die Eingänge des zweiten ODER-Gatters (P2) mit den Ausgängen (U) des ersten (M1), zweiten (M2) bzw. dritten (M3) Monitors verbunden sind und sein Ausgang (p2) mit dem Steuereingang (EC) des Schalters (INT1) verbunden ist und den Zustand dieses Schalters (INT1) steuern kann.

## Claims

1. Poller (V) comprising an output (S), as well as a first input (E1), a second input (E2) and a third input (E3) receiving respectively a first signal (Eₛ1), a second signal (Eₛ2) and a third signal (Eₛ3), the said poller (V) comprising:
- a two-channel diverter (AIG1) provided with an active input (A), with a quiescent input (R), and with a control input (EC) which is able to receive a control signal which sets, depending on its state, the said diverter (AlG1) to an active state (ACT) or to a quiescent state (REP), and with a common output (SC), the said quiescent input (R) and the said active input (A) of the said diverter (AlG1) being respectively connected to the said first and second inputs (E1, E2) of the said poller (V), whereas the said common output (SC) of the said diverter (AIG1) is connected to the said output (S) of the said poller (V); and
- a first monitor (M1) whose inputs are connected to the inputs of the said poller (V),
characterized in that:
- the said diverter (AlG1) is unique and its common output (SC) is directly connected to the output (S) of the said poller in order to apply to the latter output (S) either the signal applied to the active input (A) when the said diverter (AlG1) is in the active state (ACT), or the signal applied to the quiescent input (R) when the said diverter (AlG1) is in the quiescent state (REP); and
- the said first monitor (MI) has just two inputs (X, Y), connected respectively to the said second and third inputs (E2, E3) of the said poller (V) and is able to measure the deviation between the said second signal (Eₛ2) and third signal (Eₛ3), the output (U) of the said first monitor (MI) being connected to the control input (EC) of the said diverter (AIG1) in order to control the state of the said diverter (AIG1) as a function of the said deviation.

2. Poller (V) according to Claim 1, in which the said first monitor (M1) is of the type able to process analog or digital, serial or parallel signals, characterized in that the said first monitor (M1) comprises:
- differentiator means (D) for measuring the difference between the signals applied to the inputs (X, Y) of the said first monitor (M1);
- comparator means (C) for comparing the said difference with a predetermined threshold (TC⁺, TC⁻) and for generating an error signal if the absolute value of the said difference is greater than the absolute value of the said threshold (TC⁺, TC⁻).

3. Poller (V) according to Claim 1 or 2, characterized in that delay timer means (DT) are interposed in series with the output (U) of the first monitor (M1).

4. Poller (V) according to any one of Claims 1 to 3, characterized in that the two-channel diverter (AIG1) is of the electric switch type or electric switching device consisting of one or more identical switching elements arranged in parallel.

5. Poller (V) according to any one of Claims 1 to 3, characterized in that the two-channel diverter (AIG1) is of the optical multiplexer type with electric control or optical switch with electric control consisting of several identical optical switching elements arranged in parallel.

6. Poller (V) according to any one of Claims 1 to 3, characterized in that the two-channel diverter (AIG1) is of the hydraulic or pneumatic switch type or hydraulic or pneumatic switch consisting of several identical switching elements arranged in parallel.

7. Poller (V) according to Claim 6, in which the said first monitor (M1) is able to process fluid pressure signals, characterized in that the said first monitor (M1) comprises a member (43) subject to the opposing action of the signals appearing in the signal inputs (X, Y) of the said first monitor (M1) and controlling the passage of fluid between a pressure source (30) and the output (U) of the said first monitor (M1).

8. Poller according to either of Claims 6 and 7, characterized in that it comprises at least one second OR logic gate (P2) or one third AND logic gate (P3) constructed with the aid of at least one piston.

9. Poller (V3) according to any one of Claims 1 to 8, characterized in that the said first monitor (M1) is a secure monitor (Ms) comprising at least two twinned monitors (M1, M1′) whose inputs (X, Y) are respectively branched in parallel, and whose outputs (U) are respectively connected to the inputs of a third two-input logic gate (P3), one AND type, whose output (p3) is able to provide a signal, one state of which corresponds inherently to the detection of the identity of the two signals applied to the said inputs (X, Y) of the monitors when the said two twinned monitors (M1, M1′) each provide at output (U) such an identity detection signal, the said output (p3) of this third gate (P3) providing a different state signal in the other cases.

10. Poller (V2) according to any one of Claims 1 to 9, characterized in that it comprises, additionally:
- an interrupter (INT1) provided with an active input (A), with a control input (EC) which is able to receive a control signal which sets, depending on its state, the said interrupter (INT1) to an active state (ACT) or to a quiescent state (REP), and with a common output (SC), the said active input (A) and the said common output (SC) of the said interrupter (INT1) being respectively connected to the said common output (SC) of the said diverter (AIG1) and to the output (S2) of the said poller (V2);
- a second monitor (M2), with identical function to that of the first monitor (M1), whose two inputs (X, Y) are respectively connected to the said first and third inputs (E1, E3) of the said poller (V2), which is able to measure the deviation between the said first signal (Eₛ1) and third signal (Eₛ3);
- a third monitor (M3), with identical function to that of the first monitor (M1), whose inputs (X, Y) are respectively connected to the said first and second inputs (E1, E2) of the said poller (V2), which is able to measure the deviation between the said first signal (Eₛ1) and second signal (Eₛ2); and
- a second three-input logic gate (P2), of OR type, whose output (p2) is able to provide a signal, one state of which corresponds inherently to the detection of the identity of the two signals applied to the said inputs (X, Y) of a monitor when one at least of the said monitors (M1, M2, M3) provides at output (U) such an identity detection signal, the said output (p2) of this second logic gate (P2) providing a different state signal in the other case, the inputs of the said second OR logic gate (P2) being respectively connected to the outputs (U) of the said first (M1), second (M2) and third (M3) monitors, and its output (p2) being connected to the control input (EC) of the said interrupter (INT1) and being able to control the state of this interrupter (INT1).
